(19) **Europäisches Patentamt**

**European Patent Office**

**Office européen des brevets**

(11) **EP 1 568 912 B1**

(12) **FASCICULE DE BREVET EUROPEEN**

(45) Date de publication et mention
de la délivrance du brevet:
**25.10.2006 Bulletin 2006/43**

(51) Int Cl.:
*F16F 1/387* (2006.01)    *B29C 45/14* (2006.01)
*F16C 11/04* (2006.01)

(21) Numéro de dépôt: **05364001.7**

(22) Date de dépôt: **12.01.2005**

(54) **Procédé de fabrication d'un dispositif d'articulation à masse élastique constituée de blocs de nature differente**

Herstellungsverfahren für ein Gelenk mit unterschiedlichen elastischen Massen

Production method for a bushing comprising differing elastic blocs

(84) Etats contractants désignés:
**AT BE BG CH CY CZ DE DK EE ES FI FR GB GR HU IE IS IT LI LT LU MC NL PL PT RO SE SI SK TR**

(30) Priorité: **27.01.2004 FR 0400727**

(43) Date de publication de la demande:
**31.08.2005 Bulletin 2005/35**

(73) Titulaire: **CF Gomma Spa**
**25050 Passirano (Brescia) (IT)**

(72) Inventeurs:
• **Hercouet, Roland**
**35310 Breal Sous Montfort (FR)**
• **Louis, Dominique**
**35310 Breal Sous Montfort (FR)**
• **Viala, Henri Pierre**
**35136 Saint Jacques de la Lande (FR)**

• **Jouault, Jean-Marie**
**35133 Romagne (FR)**
• **Beauvy, Alain**
**35137 Bedee (FR)**
• **Josselin, Patrick**
**35000 Rennes (FR)**
• **Rot, Claude**
**35740 Pace (FR)**

(74) Mandataire: **Branger, Jean-Yves**
**Cabinet Régimbeau,**
**Espace Performance**
**Bâtiment K**
**35769 Saint-Gregoire-Cedex (FR)**

(56) Documents cités:
**EP-A- 0 370 524        FR-A- 2 715 702**
**GB-A- 1 571 575        US-A- 2 958 526**

**Description**

La présente invention concerne un procédé de fabrication d'un dispositif d'articulation élastique selon le préambule de la revendication 1.

(voir US-A-2 958 526)

Ce type de dispositif est destiné à assurer la liaison entre deux éléments mobiles l'un par rapport à l'autre.

Il est utilisé notamment dans le domaine des transports et plus particulièrement dans les essieux roulants, les suspensions, les dispositifs anti-couple moteur d'une automobile, d'un camion ou de tout autre engin roulant, par exemple une locomotive ou un wagon de chemin de fer. Plus précisément, il trouve une application particulière dans le domaine de la liaison au sol, notamment dans le cas de la liaison entre la caisse et un berceau, d'un essieu déformable ou encore d'un triangle d'une automobile.

De manière usuelle, un dispositif d'articulation élastique tel que décrit par exemple dans le document FR-A-2 715 702, comprend une armature extérieure tubulaire entourant un noyau central également tubulaire et coaxial, cette armature étant rendue solidaire du noyau par une masse de matière élastique, du type caoutchouc naturel ou élastomère.

La fonction d'un tel dispositif est d'assurer la liaison et le filtrage des vibrations entre deux éléments, par exemple entre la caisse d'un véhicule et la roue. A cet effet, le noyau est traversé par une ouverture centrale axiale qui permet de le rendre solidaire de la caisse d'un véhicule, tandis que le manchon extérieur est relié au moyeu d'une des roues du véhicule. Le montage inverse est également possible.

Le comportement routier d'un véhicule nécessite un niveau de valeur de raideur dynamique et statique élevée de la matière élastique, ce pour chacune des directions du véhicule.

Pour améliorer le comportement vibratoire, il est nécessaire d'augmenter le niveau d'amortissement (à la fréquence du mode à amortir), notamment pour la direction longitudinale du véhicule.

Sur le plan-acoustique, le souhait est de baisser le niveau de raideur, afin de diminuer le bruit de roulement et de façon privilégiée pour la direction verticale du véhicule.

La difficulté est de concilier le niveau de raideur dynamique et le niveau d'amortissement, compris qui est différent suivant les directions principales du dispositif d'articulation.

La raideur dynamique et l'amortissement dépendent du niveau d'amplitude et de la fréquence. D'autre part, plus un élastomère a une valeur d'amortissement élevé, plus les raideurs dynamiques augmentent en fonction des paramètres précités. En effet, il n'existe pas de matériau à valeur d'amortissement élevé, qui rigidifie peu.

De ce fait, le choix d'un élastomère est souvent le compromis entre un amortissement élevé et une rigidification peu importante, ce qui est contradictoire avec la nature de l'élastomère.

Une autre solution consiste à choisir d'opter pour une première valeur satisfaisante (par exemple sur le plan de l'amortissement) en acceptant que la deuxième valeur soit dégradée.

Encore une autre solution consiste à utiliser deux élastomères présentant des propriétés différentes, par assemblage de plusieurs dispositifs d'articulation montés de manière concentrique. Mais cela se traduit par un coût élevé.

La présente invention a pour but de proposer un procédé de fabrication d'un dispositif d'articulation élastique qui permet de ne pas faire de compromis entre un amortissement élevé et une rigidification peu importante, ceci sans surcoût notable.

Ainsi, ce procédé de fabrication d'un dispositif d'articulation élastique se caractérise essentiellement par le fait qu'on moule simultanément, notamment par injection, les dits premier et second blocs.

Ainsi, le dispositif ainsi fabriqué possède au moins un bloc de matériau élastique (par exemple du caoutchouc) amortissant dans la direction où on cherche à amortir et au moins un bloc de matériau élastique qui rigidifie peu, si on souhaite atténuer cette augmentation de raideur pour diminuer le bruit.

Dans l'ensemble de la présente demande, y compris dans les revendications, on entend par l'expression "surface de contact qui s'étend exclusivement selon une direction essentiellement transversale", le fait que cette surface s'étend selon une direction généralement cylindrique, coaxiale aux armature et noyau, ou qu'elle s'étend selon une direction essentiellement radiale. En tout état de cause, on exclut de cette définition une surface de contact située dans un plan perpendiculaire à l'axe longitudinal du dispositif, c'est-à-dire le cas où les deux blocs sont superposés dans le sens longitudinal.

Par ailleurs, on entend également que les deux blocs peuvent être aussi bien en contact direct que par l'intermédiaire d'un élément tubulaire de faible épaisseur.

Par ailleurs, selon un certain nombre de caractéristiques de ce procédé :

- le moulage est réalisé par injection, et on utilise deux unités d'injection verticales ;
- on utilise une unité d'injection verticale et une unité d'injection horizontale ;
- on utilise deux unités d'injection horizontales ;
- lesdits blocs sont coaxiaux ;
- entre les deux blocs est intercalé un élément tubulaire, fendu ou non, de faible épaisseur, coaxial auxdits armature et noyau ;
- lesdits blocs sont répartis selon des secteurs angulaires sensiblement identiques ;
- le nombre de secteurs est égal à deux ;
- le nombre de secteurs est égal à quatre, lesquels sont répartis de manière alternée, les blocs constitués du même matériau étant, de préférence, diamétralement opposés ;
- ledit dispositif présente au moins un évidement dans la zone de contact desdits blocs ;
- ladite armature extérieure comporte, à au moins une de ses extrémités, une collerette périphérique qui est revêtue de matière élastique, laquelle constitue une butée axiale ;
- ladite matière élastique est constituée du même matériau que celui du premier bloc ou du même matériau que celui du second bloc, ou d'un mélange des deux ;
- lesdits armature tubulaire et noyau central sont coaxiaux.

D'autres caractéristiques et avantages de l'invention apparaîtront à la lecture de la description qui va suivre en référence aux dessins annexés dans lesquels :

- la figure 1 est une vue en coupe selon un plan médian transversal d'un premier mode de réalisation du dispositif d'articulation fabriqué selon le procédé de l'invention ;
- la figure 2 est une vue en perspective du dispositif de la figure 1 ;
- la figure 3 est une vue en coupe, selon un plan médian longitudinal, du même dispositif ;
- la figure 4 est un schéma destiné à illustrer le comportement du dispositif des figures 1 à 3 ;
- les figures 5 et 6 sont des vues en coupe, respectivement selon des plans médians longitudinal et transversal, d'un deuxième mode de réalisation du dispositif ;
- la figure 7 est une vue en coupe, selon un plan de coupe médian transversal, d'un troisième mode de réalisation du dispositif ;
- les figures 8 et 9 sont des schémas destinés à illustrer deux variantes du procédé de fabrication par moulage des blocs de matière élastique qui constituent le dispositif ;
- la figure 10 est une vue en perspective d'un dispositif et des canaux de distribution de la matière élastique.

Avant de décrire le procédé de fabrication du dispositif d'articulation, nous décrirons ci-après la structure même de ce dispositif.

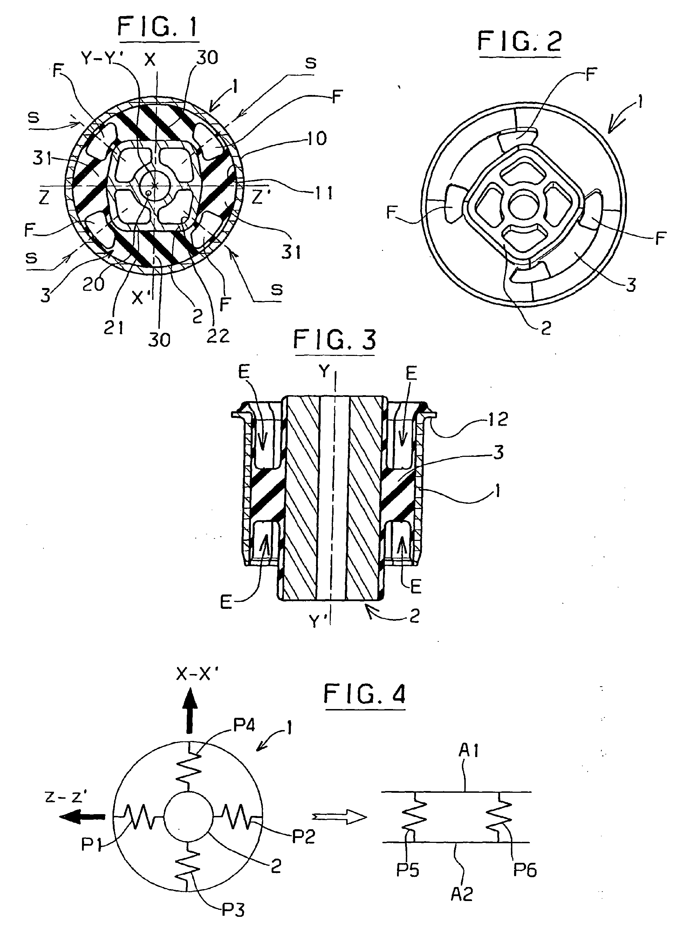

Le dispositif représenté à la figure 1 comprend une armature extérieure 1, un noyau central 2 et une masse d'élastomère 3.

L'armature extérieure 1 a une forme tubulaire allongée, d'axe **Y-Y'**, dont la section en coupe est circulaire. Elle est destinée à être emmanchée dans l'alésage d'un premier des deux éléments à articuler l'un par rapport à l'autre.

Ses parois extérieure et intérieure ont été respectivement numérotées 10 et 11.

A son extrémité supérieure, elle présente une collerette périphérique 12, constituée par un rabat à angle droit dirigé vers l'extérieur.

Le noyau central 2 est constitué d'un tube de section approximativement carrée, monté coaxialement à l'intérieur de l'armature 1. Il est destiné à être relié au deuxième élément à isoler des vibrations, par exemple au moyen d'une chape.

Sa longueur est légèrement supérieure à celle de l'armature et il est positionné de manière à ce que ses extrémités sortant de l'armature présentent sensiblement la même dimension.

Ce tube présente un alésage central et axial 20. Ses parois extérieure et intérieure ont été respectivement numérotées 21 et 22.

L'armature extérieure 1 est réalisée en matériau thermoplastique ou en métal, notamment en acier ou en aluminium. Le noyau central 2 est réalisé dans un matériau apte à supporter les contraintes mécaniques que subit l'articulation durant l'utilisation. Il s'agit avantageusement d'un métal, tel que de l'acier ou de l'aluminium.

La masse de matière élastique 3, du type caoutchouc matériau élastomère, relie entre elles les deux pièces précitées et assure l'articulation et le filtrage des vibrations.

Dans la forme de réalisation décrite ici, la masse de matière élastique s'étend essentiellement dans la partie médiane de la surface des parois en regard de l'armature 1 et du noyau 2, de sorte que deux espaces **E**, de volume identique, sont disposés de part et d'autre de la masse d'élastomère. En d'autres termes, ces espaces annulaires **E** communiquent d'une part avec la masse d'élastomère et avec l'extérieur par les extrémités opposées de l'armature.

La masse d'élastomère est ici constituée de deux blocs 30 d'une premier matériau présentant une valeur d'amortissement élevée et de deux blocs 31 d'un second matériau présentant une valeur de rigidification faible.

Ces blocs sont répartis selon des secteurs angulaires sensiblement identiques (90°) et sont organisés de sorte que les blocs 30, respectivement 31, d'un même matériau sont diamétralement opposés.

Selon une variante non représentée, ces blocs peuvent être répartis selon des secteurs angulaires différents, par exemple respectivement de 110 et 70°.

Leur surface de contact mutuel **S** s'étend donc selon des plans radiaux disposés angulairement de manière médiane par rapport aux axes **Y-Y'** et **Z-Z'** du dispositif.

Il s'agit de plans dans lesquels l'articulation n'est pas amenée à être sollicitée. Ceci est avantageux sur le plan de la durée de vie du contact mutuel entre les blocs.

Cette surface est ici très limitée du fait que les blocs présentent dans ces régions des évidements **F**.

La matière qui constitue les blocs s'étend contre la face intérieure 11 de l'armature 1 pour recouvrir la collerette 12, en constituant ainsi une butée axiale. La collerette peut être constituée soit exclusivement de la matière qui constitue les blocs 30, ou de celle qui constitue les blocs 31, ou d'un mélange de celles-ci.

On a représenté très schématiquement sur la partie gauche de la figure 4 un dispositif obtenu selon le procédé de l'invention. Les blocs précités ont été ici représentés sous la forme de pains de caoutchouc $P_1$ et $P_2$ d'axe **Z-Z'** et de pains de caoutchouc $P_3$ et $P_4$ d'axe **X-X'**. Ce dispositif peut être représenté symboliquement comme montré sur la partie droite de la même figure 4, à savoir sous la forme de deux armatures planes parallèles $A_1$ et $A_2$, reliées par deux pains de caoutchouc $P_5$ et $P_6$ montés en parallèle.

Pour une sollicitation selon **X-X'**, les pains de caoutchouc $P_3$ et $P_4$ travailleront majoritairement en compression et les pains de caoutchouc $P_1$ et $P_2$ situés dans la direction **Z-Z'** travailleront majoritairement en cisaillement.

A l'inverse, pour une sollicitation selon **Z-Z'**, les pains de caoutchouc dans la direction **X-X'** travailleront majoritairement en cisaillement et les pains de caoutchouc dans la direction **Z-Z'** travailleront majoritairement en compression.

La raideur dynamique d'un élément de caoutchouc se compose d'une partie réelle et imaginaire :

$$\begin{aligned} K^* &= K' + iK'' \\ &= K'(1 + iK''/k') \\ &= K'(1 + itg\varphi) \end{aligned}$$

avec $tg\varphi = K''/K'$
et

$K^* =$ module de la raideur dynamique
$K' =$ partie réelle de la raideur dynamique
$K'' =$ partie imaginaire de la raideur dynamique

Remarque : l'amortissement d'une articulation étant faible, on a : $K^* \approx K'$
Pour les pains de caoutchouc dans la direction X-X' : $K_x^* = K_x' + iK_x''$
Pour les pains de caoutchouc dans la direction Z-Z' : $K_z^* = K_z' + iK_z''$

Pour l'ensemble de l'articulation bi-matière ainsi constituée, la raideur dynamique sera :

$$\begin{aligned} K^* &= K_x^* + K_z^* \\ &= K_x' + iK_x'' + K_z' + iK_z'' \\ &= K_x' + K_z' + i(K_x'' + K_z'') \\ &= (K_x' + K_z')\,[1 + i(K_x'' + K_z'')/(K_x' + K_z')] \\ &= (K_x' + K_z')\,[1 + i(K_x'.K_x''/K_x' + K_z'.K_z''/K_z')/(K_x' + K_z')] \\ &= (K_x' + K_z')\,[1 + i(K_x'.K_x''/K_x' + K_z'.K_z''/K_z')/(K_x' + K_z')] \\ &= (K_x' + K_z')\,[1 + i(K_x'.tg\phi_x + K_z'.tg\phi_z)/(K_x' + K_z')] \end{aligned}$$

Si $tg\phi_x = K_x''/K_x'$ et $tg\phi_z = K_z''/K_z'$
On a donc :

$$K^* = K'\,(1 + i\,tg\phi),$$

avec

$$K' \quad =K_x' + K_z' \qquad \text{(partie réelle de l'articulation bi-matière)}$$

$$K'' \quad =K_x'.tg\varphi_x + K_z'.tg\varphi_z \qquad \text{(partie imaginaire de l'articulation bi-matière)}$$

$$Tg\varphi \quad =(K_x'.tg\varphi_x+K_z'.tg\varphi_z)/(K_x'+K_z') \quad \text{(amortissement de l'articulation bi-matière)}$$

<u>Exemple</u>

Par calcul d'éléments finis, on décompose la part de raideur suivant les directions **X-X'** et **Z-Z'** des pains en caoutchouc situés selon les directions **X-X'** et **Z-Z'**.

Le pain en caoutchouc selon la direction **X-X'** aura un fort amortissement pour amortir les modes d'essieux alors que le pain en caoutchouc selon la direction **Z-Z'** aura un faible amortissement pour ne pas rigidifier et donc générer peu de bruit de roulement.

|  | Pains Z | Pains X | Total K | tg$\varphi$ |
|---|---|---|---|---|
| **Kx** | 23 | 70 | 93 | 0,20 |
| **Ky** | **12** | **11** | 23 | 0,15 |
| **Kz** | 165 | 14 | 179 | 0,07 |
| **Tg$\varphi$ cc** | 0,05 | 0,25 |  |  |

Même si l'amortissement des pains en **X** est de 0.25, l'amortissement suivant la direction **X-X'** n'est que de 0.2. L'objectif est de minimiser la contribution de la raideur suivant **X-X'** du pain en **Z-Z'** et de la raideur suivant **Z-Z'** du pain en **X-X'** afin d'atteindre naturellement les objectifs d'amortissement par direction.

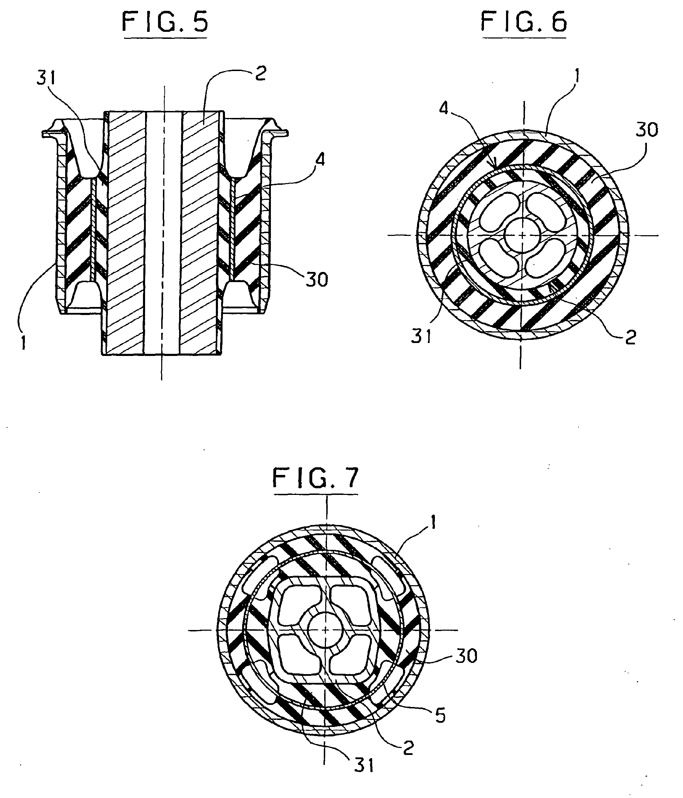

Le dispositif représenté aux figures 5 et 6 présente sensiblement la même structure que celle décrite en référence aux figures précédentes.

On a cependant ici affaire à des blocs 30 et 31 disposés de manière coaxiale et séparés par un élément tubulaire de faible épaisseur 4.

Grâce à cette structure, le bloc 31 sera souple sur une faible course (par exemple $\pm$ 0,1 mm) afin de filtrer notamment les bruits et le bloc 30 présentera une raideur élevée afin de donner satisfaction aux objectifs de comportement routier.

A titre indicatif, l'articulation peut présenter les caractéristiques suivantes :

- Selon la direction "amortissante" :

  - Sous une fréquence de 1 Herz et une sollicitation de $\pm$ 1 mm : K = 100 daN/mm
  - Sous une fréquence de 15 Herz et une sollicitation de 1 mm : Tg$\varphi$ = 0,3
  - Sous une fréquence de 100 Herz et une sollicitation de 1 mm : K = 300 daN/mm

- Selon la direction "filtrante" :

  - Sous une fréquence de 1 Herz et une sollicitation de $\pm$ 1 mm : K = 100 daN/mm
  - Sous une fréquence de 15 Herz et une sollicitation de 1 mm : Tg$\varphi$ = 0,1
  - Sous une fréquence de 100 Herz et une sollicitation de 1 mm : K = 150 daN/mm

Le dispositif représenté à la figure 7 se distingue de celui des figures 5 et 6 par le fait que les blocs 30 et 31 sont séparés par un feuilletage 5, que le noyau 2 a une section qui s'inscrit sensiblement dans un carré et que les blocs comportent des évidements.

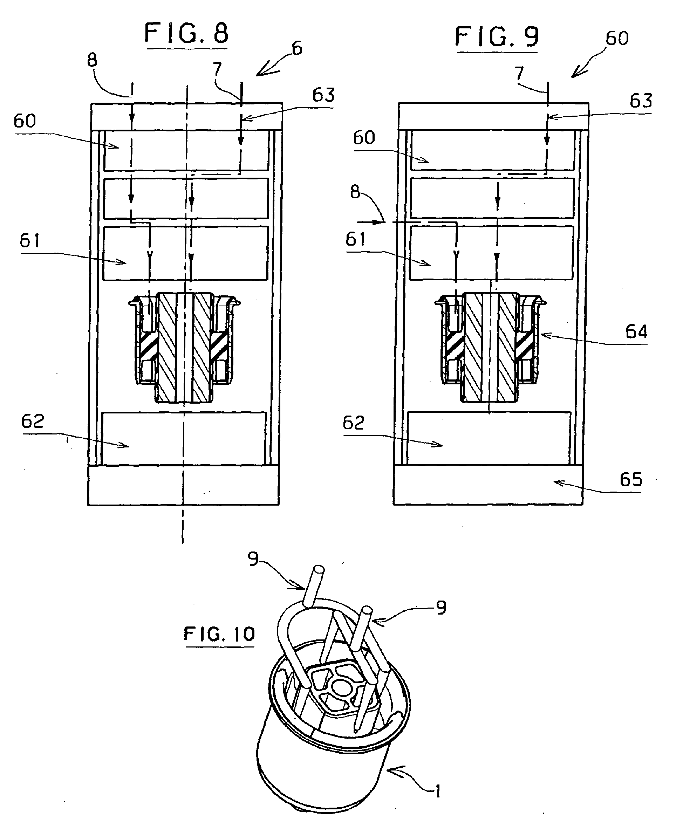

Le procédé de fabrication de ce dispositif est plus particulièrement illustré aux figures 8 et 9.

Ainsi, un exemple d'une installation permettant sa mise en oeuvre est représentée à la figure 8.

Il s'agit d'une presse 6 constituée, de haut en bas, d'un plateau supérieur 63, d'une plaque supérieure de moule 60, d'un porte-empreinte supérieur 61, d'un porte-empreinte 62 et d'un plateau inférieur de presse.

La pièce à mouler porte la référence générale 64.

Pour réaliser le moulage, on place dans le moule les armature extérieure et noyau central. On vient alors injecter les deux matières (par exemple du caoutchouc) en simultané. Pour cela, on utilise deux unités d'injection indépendantes. Dans le cas présent, on a affaire à deux unités d'injection verticales comme le montrent les flèches en traits mixtes 7 et 8, qui identifient les parcours suivis par la matière.

Le réglage des paramètres de moulage (temps d'injection, vitesse d'injection, température) sera choisi de manière à ne pas dépendre de la différence de viscosité entre les deux matières.

L'installation représentée à la figure 9 se différencie de la précédente uniquement par le fait qu'on utilise une unité d'injection verticale et une unité d'injection horizontale, ainsi que le montrent les flèches 7 et 8.

A la figure 10 est représenté un dispositif 1 avec, symbolisé par des lignes portant la référence 9, les deux "chemins" d'injection suivis par la matière. On notera à cet égard, qu'il existe autant de points d'injection que de blocs 30 et 31.

On notera enfin que deux blocs de matières sont en contact l'un avec l'autre à un endroit où la pièce n'est pas ou peu sollicitée. Si ce contact avait lieu à un endroit de sollicitation important, la durée de vie du dispositif ne serait pas très longue. L'implantation de cette zone est déterminée notamment par la géométrie de la pièce et les paramètres de fabrication.

## Revendications

1. Procédé de fabrication d'un dispositif d'articulation élastique destiné à permettre l'articulation de deux éléments l'un par rapport à l'autre, du type comprenant une armature extérieure tubulaire axiale (1) apte à être emmanchée dans le premier élément, un noyau tubulaire central (2) apte à être relié au deuxième élément, monté à l'intérieur de ladite armature (1) et d'axe parallèle à cette dernière, ainsi qu'une masse (3) de matière élastique reliant entre eux ladite armature extérieure (1) et ledit noyau central (2), qui est constituée d'au moins un premier bloc (30) d'un premier matériau présentant une valeur d'amortissement élevé et d'au moins un second bloc (31) d'un second matériau présentant une valeur de rigidification faible, ces premier et second blocs (30,31) étant contigus, c'est-à-dire en contact direct ou par l'intermédiaire d'un élément tubulaire de faible épaisseur, et présentant une surface de contact (5) qui s'étend exclusivement selon une direction essentiellement transversale, c'est-à-dire généralement cylindrique, coaxiale aux armature et noyau ou essentiellement radiale,
**caractérisé par le fait qu'**on moule simultanément, notamment par injection, les dits premier et second blocs (30,31).

2. Procédé selon la revendication 1 dans lequel le moulage est réalisé par injection, **caractérisé par le fait que** l'on utilise deux unités d'injection verticales.

3. Procédé selon la revendication 1 dans lequel le moulage est réalisé par injection, **caractérisé par le fait que** l'on utilise une unité d'injection verticale et une unité d'injection horizontale.

4. Procédé selon la revendication 1 dans lequel le moulage est réalisé par injection, **caractérisé par le fait que** l'on utilise deux unités d'injection horizontales.

5. Procédé selon l'une des revendications 1 à 4, **caractérisé par le fait que** lesdits blocs (30,31) sont coaxiaux.

6. Procédé selon la revendication 5, **caractérisé par le fait qu'**entre les deux blocs (30,31) est intercalé un élément tubulaire (4), fendu ou non, de faible épaisseur, coaxial auxdits armature (1) et noyau (2).

7. Procédé selon l'une des revendications 1 à 4, **caractérisé par le fait que** lesdits blocs (30,31) sont répartis selon des secteurs angulaires sensiblement identiques.

8. Procédé selon la revendication 7, **caractérisé par le fait que** le nombre de secteurs est égal à deux.

9. Procédé selon la revendication 7, **caractérisé par le fait que** le nombre de secteurs est égal à quatre, lesquels sont répartis de manière alternée, les blocs (30,31) constitués du même matériau étant, de préférence, diamétralement opposés.

10. Procédé selon l'une des revendications 7 à 9, **caractérisé par le fait que** ledit dispositif présente au moins un évidement (F) dans la zone de contact desdits blocs.

**11.** Procédé selon l'une des revendications précédentes, **caractérisé par le fait que** ladite armature extérieure (1) comporte, à au moins une de ses extrémités, une collerette périphérique (12) qui est revêtue de matière élastique, laquelle constitue une butée axiale.

**12.** Procédé selon la revendication 11, **caractérisé par le fait que** ladite matière élastique est constituée du même matériau que celui du premier bloc (30) ou du même matériau que celui du second bloc (31), ou d'un mélange des deux.

**13.** Procédé selon l'une des revendications précédentes, **caractérisé par le fait que** lesdits armature tubulaire (1) et noyau central (2) sont coaxiaux.

**Claims**

**1.** Process for manufacturing an elastic bushing device intended to join two elements together, of the type comprising an axial tubular outer armature (1) capable of being fitted into the first element, a central tubular core (2) capable of being linked to the second element, which core is mounted inside said armature (1) and has an axis parallel to the latter, and a mass (3) of elastic material fitting together said outer armature (1) and said central core (2), which mass of material consists of at least a first block (30) of a first material having a high damping factor and of at least a second block (31) of a second material having a low stiffening factor, these first and second blocks (30, 31) being contiguous, that is to say in contact with each other directly or via a thin tubular element, and having a contact surface (5) that extends exclusively in an essentially transverse direction, that is to say one that is generally cylindrical, coaxial with both the armature and the core, or essentially radial,
**characterized in that** said first and second blocks (30, 31) are moulded simultaneously, especially by injection moulding.

**2.** Process according to Claim 1, in which the moulding is carried out by injection moulding, **characterized in that** two vertical injection units are used.

**3.** Process according to Claim 1, in which the moulding is carried out by injection moulding, **characterized in that** one vertical injection unit and one horizontal injection unit are used.

**4.** Process according to Claim 1, in which the moulding is carried out by injection moulding, **characterized in that** two horizontal injection units are used.

**5.** Process according to one of Claims 1 to 4, **characterized in that** said blocks (30, 31) are coaxial.

**6.** Process according to Claim 5, **characterized in that** a thin, slit or unslit, tubular element (4) is inserted between the two blocks (30, 31), said tubular element being coaxial with said armature (1) and said core (2).

**7.** Process according to one of Claims 1 to 4, **characterized in that** said blocks (30, 31) are distributed in substantially identical angular sectors.

**8.** Process according to Claim 7, **characterized in that** the number of sectors is equal to two.

**9.** Process according to Claim 7, **characterized in that** the number of sectors is equal to four, which are distributed alternately, the blocks (30, 31) made of the same material being, preferably, diametrically opposed.

**10.** Process according to one of Claims 7 to 9, **characterized in that** said device has at least one recess (F) in the contact region between said blocks.

**11.** Process according to one of the preceding claims, **characterized in that** said outer armature (1) includes, at least at one of its ends, a peripheral flange (12) which is coated with elastic material, said flange constituting an axial stop.

**12.** Process according to Claim 11, **characterized in that** said elastic material consists of the same material as that of the first block (30) or the same material as that of the second block (31), or a blend of the two.

**13.** Process according to one of the preceding claims, **characterized in that** said tubular armature (1) and said central core (2) are coaxial.

**Patentansprüche**

1. Verfahren zur Herstellung einer elastischen Gelenkvorrichtung, die dazu bestimmt ist, die gegenseitige gelenkige Verbindung zweier Elemente zu gestatten, von dem Typ, der folgendes umfasst: eine äußere, rohrförmige, axiale Armatur (1), die geeignet ist, in das erste Element eingepreßt zu werden, einen rohrförmigen, zentralen Kern (2), der geeignet ist, mit dem zweiten Element verbunden zu werden, im Inneren der genannten Armatur (1) angebracht ist und zu dieser achsparallel ist, sowie eine Masse (3) aus elastischem Material, die die genannte äußere Armatur (1) und den genannten zentralen Kern (2) miteinander verbindet, wobei die Masse aus wenigstens einem ersten Block (30) aus einem ersten Material, das einen erhöhten Dämpfungswert aufweist, und aus wenigstens einem zweiten Block (31) aus einem zweiten Material, das einen geringen Versteifungswert aufweist, gebildet ist, wobei dieser erste und zweite Block (30,31) aneinander angrenzen, das heißt, unmittelbar oder über ein rohrförmiges Element mit geringer Dicke in Verbindung stehen, und eine Berührungsfläche (5) aufweisen, die sich ausschließlich in einer im wesentlichen querverlaufenden Richtung erstreckt, das heißt, insgesamt zylindrisch, zur Armatur und zum Kern koaxial oder im wesentlichen radial,
**dadurch gekennzeichnet, daß** man den genannten, ersten und zweiten Block (30,31) gleichzeitig, insbesondere durch Spritzguß, formt.

2. Verfahren nach Anspruch 1, bei dem das Formen durch Spritzguß durchgeführt wird, **dadurch gekennzeichnet, daß** man zwei vertikale Einspritzeinheiten verwendet.

3. Verfahren nach Anspruch 1, bei dem das Formen durch Spritzguß durchgeführt wird, **dadurch gekennzeichnet, daß** man eine vertikale Einspritzeinheit und eine horizontale Einspritzeinheit verwendet.

4. Verfahren nach Anspruch 1, bei dem das Formen durch Spritzguß durchgeführt wird, **dadurch gekennzeichnet, daß** man zwei horizontale Einspritzeinheiten verwendet.

5. Verfahren nach einem der Ansprüche 1 bis 4, **dadurch gekennzeichnet, daß** die genannten Blöcke (30,31) koaxial sind.

6. Verfahren nach Anspruch 5, **dadurch gekennzeichnet, daß** zwischen die beiden Blöcke (30,31) ein rohrförmiges, geschlitztes oder nichtgeschlitztes Element (4) mit geringer Dicke eingeschachtelt ist, das zur genannten Armatur (1) und zum genannten Kern (2) koaxial ist.

7. Verfahren nach einem der Ansprüche 1 bis 4, **dadurch gekennzeichnet, daß** die genannten Blöcke (30,31) in Winkelrichtung nach im wesentlichen identischen Sektoren unterteilt sind.

8. Verfahren nach Anspruch 7, **dadurch gekennzeichnet, daß** die Anzahl der Sektoren gleich zwei ist.

9. Verfahren nach Anspruch 7, **dadurch gekennzeichnet, daß** die Anzahl der Sektoren gleich vier ist, wobei diese alternierend unterteilt sind, wobei die Blöcke (30,31), die aus dem selben Material gebildet sind, einander vorzugsweise gegenüberliegen.

10. Verfahren nach einem der Ansprüche 7 bis 9, **dadurch gekennzeichnet, daß** die genannte Vorrichtung wenigstens eine Aussparung (F) in der Berührungszone der genannten Blöcke aufweist.

11. Verfahren nach einem der vorhergehenden Ansprüche, **dadurch gekennzeichnet, daß** die genannte äußere Armatur (1), an wenigstens einem ihrer Enden, einen Umfangskragen (12) aufweist, der mit elastischem Material umkleidet ist und einen axialen Anschlag bildet.

12. Verfahren nach Anspruch 11, **dadurch gekennzeichnet, daß** das genannte elastische Material aus dem selben Material wie das des ersten Blocks (30) oder dem selben Material wie das des zweiten Blocks (31) oder einer Mischung der beiden gebildet ist.

13. Verfahren nach einem der vorhergehenden Ansprüche, **dadurch gekennzeichnet, daß** die genannte rohrförmige Armatur (1) und der zentrale Kern (2) koaxial sind.

## FIG. 1

## FIG. 2

## FIG. 3

## FIG. 4

## FIG. 5

## FIG. 6

## FIG. 7

## FIG. 8

## FIG. 9

## FIG. 10